# EUROPÄISCHE PATENTANMELDUNG

(11) **EP 1 790 995 A1**
(43) Veröffentlichungstag der Anmeldung: **30.05.2007**
(21) Anmeldenummer: 06405495.0
(22) Anmeldetag: 23.11.2006
(51) Int. Cl.: G01S 13/04, G01S 13/536, G01S 13/56, G01S 13/58, G08B 13/24, H01Q 13/20

(54) **Bewegungsermittlungsvorrichtung**

(30) Priorität: 23.11.2005 EP 05405657
(71) Anmelder: Ascom (Schweiz) AG, 3000 Bern 14 (CH)
(72) Erfinder: Lüthi, Erhard, 8634 Hombrechtikon (CH)
(74) Vertreter: Rüfenacht, Philipp Michael

(57) **Zusammenfassung**

Eine Bewegungsermittlungsvorrichtung umfasst einen als integrierte Schaltung realisierten SRD-Transceiver (4) sowie eine Auswerteeinheit (20) und dient zur Auslösung eines Vorgangs infolge einer Bewegung (11) eines Objekts (1). Hierfür wird mit dem SRD-Transceiver eine Sendestrahlung (5) mit vorgegebener Trägerfrequenz ausgestrahlt, welche vom Objekt (1) infolge dessen Bewegung (11) mit veränderten Strahlungsparametern als Reflexionsstrahlung (9) reflektiert wird. Diese Reflexionsstrahlung (9) wird mit dem SRD-Transceiver wieder empfangen (7), zunächst analog (15, 17, 19) und schliesslich noch digital mit einem als integrierte Schaltung ausgebildeten Microcontroller (23) der Auswerteeinheit (20) verarbeitet. Wird eine Bewegung (11) festgestellt, wird mit dem SRD-Transceiver ein Auslösesignal (26) an eine Auslösevorrichtung (25) übermittelt, indem der als Detektionssstrahlung verwendeten Sendestrahlung (5) diese Auslöseinformation aufgeprägt wird.

## Beschreibung

### Technisches Gebiet

Die Erfindung betrifft eine Bewegungsermittlungsvorrichtung zur Auslösung eines Vorgangs infolge einer Bewegung eines Objekts, mit einer Sende-/Empfangseinheit und einer Auswerteeinheit, wobei mit der Sende-/Empfangseinheit eine Sendestrahlung aussendbar und die vom Objekt reflektierte Sendestrahlung als Reflexionsstrahlung empfangbar ist, wobei die Sendestrahlung ein Sendesignal mit einer Trägerfrequenz im Bereich von einigen MHz bis einigen hundert GHz umfasst, aus der Reflexionsstrahlung ein Reflexionssignal ermittelbar und die Bewegung des Objekts durch eine Auswertung des Reflexionssignals mit der Auswerteeinheit feststellbar ist und mit der Auswerteeinheit in Abhängigkeit der Bewegung des Objekts eine Auslöseinformation erzeugbar und der Vorgang auslösbar ist, indem die Auslöseinformation mit der Sende-/Empfangseinheit als Sendestrahlung aussendbar ist. Weiter betrifft die Erfindung eine Anordnung mit wenigstens einer derartigen Bewegungsermittlungsvorrichtung sowie ein Verfahren zum Auslösen eines Vorgangs infolge einer Bewegung eines Objekts mit einer derartigen Bewegungsermittlungsvorrichtung.

### Stand der Technik

Die Erfindung befasst sich mit einer Vorrichtung, einer Anordnung und einem Verfahren zur Detektion einer Bewegung sowie zur Auslösung eines Vorganges in Abhängigkeit der detektierten Bewegung. Derartige Vorrichtungen, Anordnungen und Verfahren werden u. a. an automatischen Schiebe-, Karussell-, Rundbogen- und Pendeltüren, Schnelllauftoren und Schrankenanlagen, automatischen sanitären Spülanlagen usw. verwendet. Sie können jedoch auch zur Kabinenvorraumkontrolle und als Wiederanlaufgeber bei Fahrtreppen eingesetzt werden. D. h. sie können überall dort eingesetzt werden, wo aufgrund einer Bewegung (bzw. einer fehlenden Bewegung) eines beliebigen Objekts (wie etwa eines Gegenstandes oder eine Person) ein bestimmter Vorgang ausgelöst werden soll. Die bekannten Bewegungsermittlungsvorrichtungen obigen Prinzips sind kompliziert und aufwendig aufgebaut und damit teuer in ihrer Anschaffung und ihrem Unterhalt.

Aus der internationalen Patentanmeldung WO 2005/074422 ist ein derartiger Radarsensor bekannt. Mit einem Sender (13) und zugehöriger Antenne (20) wird ein CW (continuous wave) Signal ausgesendet, wobei das von einer Person (10) reflektierte Signal detektiert und mit einem Mikroprozessor (28) verarbeitet wird. Um Daten zu senden, wird das Senden des CW-Signals unterbrochen und das Sendesignal des Senders (13) wird mit den Daten moduliert und dieses modulierte Signal wird via die Antenne (20) ausgesendet. Dieses Signal wird dann von einem entfernten Empfänger (34) empfangen und ausgewertet. Der Sender (13) und der Mikroprozessor (28, 50) sind jeweils als eigenständige Einheiten ausgebildet, die über entsprechende Leitungen (34) miteinander verbunden sind. Dadurch sind die Geräte entsprechend komplex und teuer in der Herstellung und der Platzbedarf ist entsprechend hoch.

Aus dem Dokument DE 102 20 759 ist ein weiterer Radarsensor bekannt, bei welchem das Sende- und Empfangsmodul zum Aussenden der Detektorstrahlung zugleich die Sende-und Empfangseinheit für die Datenübertragung zwischen dem Radarsensor und einer Fernbedienungseinheit ist. Auch hier sind das Frontend (4) und die Auswerteeinheit (5) als separate Einheiten ausgebildet und miteinander verbunden. Allerdings wird hier nicht aufgrund einer festgestellten Bewegung ein Vorgang ausgelöst.

Aus der US 6,633,254 ist ein weiterer Radarsensor bekannt. Bei diesem wird dem Radarsensorsignal die Bewegungsinformation des bewegten Gegenstands aufmoduliert. Gleichzeitig wird das derart modulierte Radarsensorsignal von einer Zielerfassungsvorrichtung empfangen. Die Auswertung des reflektierten Signals wird hier nicht im Radarsensor vorgenommen, sondern erst in der Zielerfassungsvorrichtung.

Weiter sind von verschiedenen Herstellern so genannte SRD (short range device) single-Chips bekannt, welche einen kompletten SRD-Sender und einen kompletten SRD-Empfänger auf einem Halbleiterchip vereinen. Als Beispiele seien hier die beiden Chips nRF905 von nordic Semiconductor bzw. CC2500 von Texas Instruments (Chipcon) erwähnt. Sämtliche bekannten Anwendungsbeispiele solcher Chips, sei es von den Herstellern selber oder von Dritten, sind ausschliesslich auf die kurzreichweitige Datenübermittlung gerichtet.

### Darstellung der Erfindung

Aufgabe der Erfindung ist es, eine Bewegungsermittlungsvorrichtung, eine Anordnung sowie ein Verfahren zu schaffen, die dem eingangs genannten technischen Gebiet zugehören, welche einfach und damit preisgünstig herstell- und wartbar sind.

Die Erfindung befasst sich mit der Bewegung von Gegenständen bzw. Objekten, bei deren Bewegung vorzugsweise an einem von der Messung entfernten Ort etwas geschehen bzw. ausgelöst werden soll. Der Ausdruck Gegenstand bzw. Objekt ist nicht allzu wörtlich zu nehmen. Es wird hierunter alles verstanden, was sich bewegen kann oder bewegt werden kann. Die Bewegungsvorrichtung soll also auch als Bewegungsmelder für sich bewegende Menschen und Tiere sowie für nicht lebende bewegte bzw. bewegbare Materie verwendbar sein.

Die Lösung der Aufgabe ist durch die Merkmale des Anspruchs 1 definiert. Die Bewegungsermittlungsvorrichtung zur Auslösung eines Vorgangs infolge einer Bewegung eines Objekts umfasst eine Sende-/Empfangseinheit und eine Auswerteeinheit. Mit der Sende-/Empfangseinheit ist eine Sendestrahlung aussendbar. Vom Objekt wird diese Sendestrahlung reflektiert, wobei die reflektierte Sendestrahlung mit der Sende-/Empfangseinheit als Reflexionsstrahlung empfangbar ist. Die Sendestrahlung umfasst hierbei ein Sendesignal mit einer Trägerfrequenz im Bereich von einigen MHz bis einigen hundert GHz. Die Trägerfrequenz des Sendesignals liegt insbesondere im Mikrowellenbereich. Besonders bevorzugt ist eine Trägerfrequenz zwischen 100 MHz und 10 GHz. Aus der empfangenen Reflexionsstrahlung ist mit der Bewegungsermittlungsvorrichtung ein Reflexionssignal ermittelbar und die Bewegung des Objekts ist durch eine Auswertung des Reflexionssignals mit der Auswerteeinheit feststellbar. Schliesslich ist in Abhängigkeit der Bewegung des Objekts mit der Auswerteeinheit eine Auslöseinformation erzeugbar, wobei der Vorgang auslösbar ist, indem die Auslöseinformation mit der Sende-/Empfangseinheit als Sendestrahlung aussendbar ist. Gemäss der Erfindung weist nun die Sende-/Empfangseinheit eine geringe maximale Sendeleistung von einem Watt erp (effective radiated power) auf und ist als integrierte Schaltung auf einem Halbleiterchip realisiert, wobei auch die Auswerteeinheit als integrierte Schaltung auf einem Halbleiterchip realisiert ist. Die maximale Sendeleistung der Sende-/Empfangseinheit liegt insbesondere unter 100 Milliwatt erp, vorzugsweise unter 40 Milliwatt erp. Die maximale Sendeleistung entspricht vorzugsweise den entsprechenden Standards für den Betrieb von so genannten SRD (short range device) oder LPD (low power device) Geräten, die in speziellen Frequenzbereichen und mit entsprechend limitierten Sendeleistungen lizenzfrei betrieben werden dürfen.

Bei einer bevorzugten Ausführungsform der Erfindung sind die Sende-/Empfangseinheit und die Auswerteeinheit gemeinsam auf einem einzigen Halbleiterchip realisiert. Für diesen Zweck werden beispielsweise SRD-Chips verwendet, welche einen integrierten Microcontroller umfassen. Da solche integrierten Microcontroller verglichen mit separat erhältlichen Prozessoren jedoch eher leistungsschwach sind, werden solche Chips typischerweise bei eher einfachen Anwendungen eingesetzt.

Indem die Sende-/Empfangseinheit (nachfolgend auch als Transceiver bezeichnet) und die Auswerteeinheit (nachfolgend auch als Prozessor bezeichnet) als so genannter single-Chip realisiert werden, kann die Anzahl Bauelemente und damit nicht nur der Platzbedarf der erfindungsgemässen Vorrichtung verringert werden, auch die geometrischen Dimensionen der Vorrichtung können entsprechend gering gehalten werden. Zudem kann die gesamte Produktionslogistik vereinfacht werden, da die Anzahl benötigter Bauelemente verkleinert werden kann. Durch die Integration dieser Funktionen auf einem gemeinsamen Chip kann auch die Leistungsaufnahme der Vorrichtung gesenkt werden. Dies ist von besonderem Interesse, da solche Geräte typischerweise mittels einer Batterie betrieben werden, deren Lebensdauer dadurch erheblich verlängert werden kann. Zudem ist die Produktion solcher Chips bei grösseren Stückzahlen vergleichsweise kostengünstig.

Von der Bewegungsermittlungsvorrichtung kann nun bei Erreichen eines Bewegungsereignisses immer ein und dieselbe Auslöseinformation ausgesandt werden. Die Bewegungsermittlungsvorrichtung kann nun auch derart ausgebildet sein, d. h. ihr unten beschriebener Microcontroller derart programmiert sein, dass z. B. unterschiedliche Geschwindigkeitswerte der Bewegungen oder unterschiedliche Geschwindigkeitswertezusammensetzungen bzw. unterschiedliche Amplitudenhöhen der Reflexionsstrahlung (= eine unterschiedliche Anzahl bewegter Gegenstände) ermittelbar sind. Es lässt sich dann nämlich ermitteln, wie viele Gegenstände und wie schnell sie sich nähern. Eine derartige Information wäre z. B. bei Türöffnern wichtig, damit die Zeit für ein Offenstehen, erzeugt durch die Ausführungsvorrichtung, für eine jeweils unterschiedliche Anzahl Passanten richtig bemessen wird.

Die Bewegungsermittlungsvorrichtung ist beispielsweise als so genanntes SRD Gerät ausgebildet, welche auch als LPD (low power device) bezeichnet werden. Für die Bewegungsermittlung greift man je nach Landesstandard auf die für solche Geräte freigegebenen, typischerweise lizenzfreien Frequenzen zurück. Diese liegen beispielsweise bei 433 MHz, 868 MHz, 915 MHz oder 2,4 GHz. Aus diesen freigegebenen Frequenzbereichen wird nun einer ausgewählt und für die Bewegungsdetektion verwendet. Eine Strahlung mit derselben Trägerfrequenz wird auch für die Übermittlung der Auslöseinformation zur Auslösevorrichtung verwendet.

Als Sendestrahlung für die Bewegungsdetektion kann das Sendesignal beispielsweise unmoduliert ausgesendet werden. In diesem Fall wird die Bewegungsdetektion unterbrochen, wenn mit dem Sendesignal Daten übermittelt werden sollen, d. h. wenn dem Sendesignal die Daten aufmoduliert werden müssen. Die ausgesandte Sendestrahlung zur Bewegungsermittlung kann beispielsweise als cw- (contiunous wave)- Strahlung ausgesendet werden. Durch eine Reflexion an einem bewegten Gegenstand bzw. an einer Person ist nun bei der reflektierten Strahlung gegenüber der ausgesandten Strahlung die Amplitude, die Phase und/oder die Momentanfrequenz verändert. Alle drei Eigenschaften können nun ausgewertet werden oder nur eine dieser Eigenschaften. Vorzugsweise wird man, wie unten beschrieben, die Momentanfrequenz ermitteln und auswerten.

Bei einer bevorzugten Ausführungsform der Erfindung umfasst die Bewegungsermittlungsvorrichtung allerdings eine Modulationseinheit, mit welcher die zu übertragenden Daten dem von der Sende-/Empfangseinheit aussendbaren Sendesignal aufmodulierbar sind. D. h. das derart modulierte Sendesignal wird nicht nur zur Übertragung der Daten verwendet, sondern gleichzeitig auch als Detektionsstrahlung zur Feststellung der Bewegung des Objekts.

Die Modulation des Sendesignals kann hierbei beliebig sein. Sie kann beispielsweise als Amplitudenmodulation, als Pulscodemodulation, als Phasenmodulation oder als Frequenzmodulation erfolgen. Für die Bewegungsdetektion lassen sich aus dem Spektralanteil des Reflexionssignals bei der Trägerfrequenz auch in diesem Fall die Änderungen in der Amplitude, der Phase und/oder der Momentanfrequenz in analoger Weise detektieren und auswerten wie bei einem unmodulierten Sendesignal. Die Detektion der Daten hingegen erfolgt in bekannter Weise anhand der anderen Spektralanteile entsprechend der gewählten Modulation. Vorzugsweise wird eine Modulation mit einer konstanten Enveloppe, beispielsweise eine Phasen- oder eine Frequenzmodulation verwendet.

Da hierbei nicht mehr zwischen Bewegungsdetektion und Datenübermittlung umgeschaltet werden muss, wird eine lückenlose Bewegungs-Erfassung und Bewegungs-Übermittlung möglich. Oder mit anderen Worten: das Datensignal, welchem die Daten aufmoduliert sind, wird nicht nur für die Datenübertragung verwendet, sondern die von einem Objekt reflektierten Anteile werden auch zur Detektion einer Bewegung des Objekts genutzt, quasi als Abfallprodukt. Entsprechend kann auch ein Datenübertragungssystem, welches nicht mit den oben angegebenen Frequenzen arbeitet, sondern beispielsweise für einen anderen Frequenzbereich zugelassen ist, als erfindungsgemässe Bewegungserfassungsvorrichtung betrieben werden, indem die von einem Objekt reflektierte Sendestrahlung detektiert und wie beschrieben ausgewertet wird.

Wenn mehrere verschiedene Messwerte vorliegen können, beispielsweise wenn mehrere verschiedene Eigenschaften der reflektierten Strahlung ausgewertet werden oder wenn eine bestimmte Eigenschaft verschiedene Werte annehmen kann, kann in Abhängigkeit dieser verschiedenen Messwerte selbstverständlich auch jeweils unterschiedlich darauf reagiert werden. D. h. es kann ein unterschiedliches Auslösesignal erzeugt und an die Auslösevorrichtung übermittelt werden. So können je nach detektierter Situation (einer oder mehrere Benutzer, langsame/schnelle Bewegung, Bewegung auf die Vorrichtung zu/weg, etc.) völlig oder sich nur leicht unterscheidende Vorgänge ausgelöst werden.

Die Sendestrahlung der Bewegungsermittlungsvorrichtung wird typischerweise an einem ersten Ort ausgestrahlt, wohingegen die Auslöseinformation typischerweise an einem zweiten, vom ersten entfernten Ort empfangen wird. Bei der empfangenen Reflexionsstrahlung werden die durch die Bewegung veränderten Strahlungsparameter vorzugsweise mit vorgegebenen Schwellenparametern verglichen; womit sich Fehlmessungen infolge von Rauschen oder nicht gewünschten Auslösungen durch Vögel, Kleintiere, herabfallende Blätter oder nicht zu beachtende Gegenstände eliminieren oder zumindest verringern lassen. Bei einer Abweichung wenigstens eines Parameters wird die Auslöseinformation erzeugt. Bei den Parametern kann auch mit Bandbreiten gearbeitet werden. D. h. die Auslöseinformation ist erzeugbar, wenn der Strahlungsparameter nicht in einem durch die Schwellenparameter vorgegebenen Parameterbereich liegt.

Wird die Auslöseinformation am zweiten Ort empfangen, wird in Abhängigkeit dieser Auslöseinformation der Vorgang ausgelöst, d. h. initiiert oder durchgeführt. Der Vorgang kann hierbei sowohl am zweiten Ort selber von der Vorrichtung durchgeführt werden, welche die Auslöseinformation empfangen hat (nachfolgend auch als Auslösevorrichtung bezeichnet), oder der Vorgang wird an einem dritten Ort durchgeführt und von der Vorrichtung, welche die Auslöseinformation empfangen hat, lediglich initiiert.

Wo sich der erste Ort befindet, hängt vom Einsatzgebiet ab. Handelt es sich z. B. um einen Wiederanlaufgeber bei einer Rolltreppe, so wird man die Sendestrahlung derart aussenden, dass sich einer noch stillstehenden Treppe annähernde Personen erfasst werden. Die Auslöseinformation wird dann an den zweiten Ort übertragen, der sich in der Nähe der Antriebsmotoren befindet. Einen Sendebereich zur Bewegungsermittlung und einen Sendebereich, welcher zur Übermittlung von Information an einen zweiten Ort verwendet wird, wird man vorzugsweise innerhalb eines Sendebereichs um eine einzige Sendeantenne ausbilden. Die Reichweite liegt typischerweise im Bereich von einigen Zentimetern bis zu einigen zehn Metern. In der Regel wird für die Bewegungsermittlung eine kurze Reichweite benötigt und für die Informationsübertragung zu einem zweiten Ort eine noch kürzere Entfernung; es gibt jedoch auch Anwendungen, bei denen eine grössere Entfernung zu überbrücken ist. Eine Anwendung mit einer verhältnismässig grossen Distanz zum zweiten Ort kann sich beispielsweise bei einer Illuminationseinschaltung, beim Einschalten von grossflächigen zu beleuchtenden Reklametafeln mit stillstehenden oder bewegten Anzeigen ergeben. Bei grösseren zu überbrückenden Entfernungen wird man bevorzugt eine Antenne verwenden, welche das Sendesignal nicht in alle Raumrichtungen mit gleicher Energie abstrahlt, sondern welche die abgestrahlte Energie auf einen Teilraum mit einem kleinen Raumwinkel konzentriert. In diesen Fall kann dann immer mit ein und derselben Sendeleistung bei gleicher Trägerfrequenz gearbeitet werden. Die Richtwirkung der Antenne für die Bewegungsermittlung und die Datenübermittlung zum zweiten Ort wird typischerweise dieselbe sein, wobei mit variablen Antennen aber auch unterschiedliche Richtwirkungen erzielt werden können.

Es kann nun im Laufe der Zeit vorkommen, dass sich beispielsweise infolge von Alterung Parameter der Sendeleistung ändern oder generell andere Parameter bei der Bewegungsermittlung und bei der Informationsübermittlung an den zweiten entfernten Ort benötigt werden. Eine derartige Justage oder Parameteränderung kann nun durch eine Wartung bzw. Überholung der Bewegungsermittlungsvorrichtung, d. h. direkt an derselben, vorgenommen werden. Da jedoch die Bewegungsermittlungsvorrichtung eine Empfangseinheit für eine von einem bewegten Gegenstand reflektierte Reflexionsstrahlung hat, kann nun auch von einen dritten beliebig entfernten Ort eine Sendestrahlung, welche dann eine entsprechende Codierung aufweist, welche, wie unten beschrieben, von der Bewegungsermittlungsvorrichtung auswertbar ist, zur Neueinstellung oder Verstellung von Sende- und/ oder Empfangsparametern, insbesondere von Schwellenparametern für die Detektion ausgesandt werden. Diese Informationsstrahlung hat dieselbe Trägerfrequenz wie die Sendestrahlung für die Bewegungsermittlung und wird in der Regel von einer Zentraleinheit ausgesandt und kann eine oder mehrere Bewegungsermittlungsvorrichtungen betreffen.

Analog zur Justage oder Parameteränderung (Parametrierung) bei einer Bewegungsermittlungsvorrichtung kann auch eine entsprechende Änderung an einer Steuer- und Auslöseeinheit am zweiten Ort vorgenommen werden, wobei auch hier die Information mit einer Strahlung gleicher Trägerfrequenz vorgenommen wird.

Da die vom bewegten Gegenstand reflektierte Reflexionsstrahlung verglichen mit der Sendestrahlung eine bedeutend geringere Intensität hat, müssen Massnahmen getroffen werden, um eine ausreichende Rauschunterdrückung und Diskriminierung zu erreichen. Bei der Bewegungsermittlung wird die Sendestrahlung mit der empfangenen, vom bewegten Gegenstand reflektierten Reflexionsstrahlung hierfür gemischt. Dies erfolgt mit einer Mischereinheit. Das daraus resultierende Mischsignal enthält hierbei Frequenzkomponenten, welche im Frequenzbereich der Bewegungsfrequenz des Gegenstands liegen. Wird keine Bewegung detektiert, ergibt sich das Mischsignal 0 Hz, d. h. das Mischsignal hat keine Frequenzanteile verschieden von Null. Wird eine Bewegung detektiert, werden diese Frequenzkomponenten aufbereitet und als Auslöseinformation der Sendestrahlung aufgeprägt, beispielsweise als Amplitudenmodulation, als Pulscodemodulation, als Phasenmodulation oder als Frequenzmodulation wie z. B. eine GFSK (Gaussian Frequency Shift Keying) - Modulation. Zum Wegfiltern jener Signalanteile im Reflexionssignal, welche von der Modulation des Sendesignal herrühren, umfasst die Bewegungsermittlungsvorrichtung eine Filtereinheit, beispielsweise ein analoges Filter, mit welchem das Mischsignal am Ausgang der Mischereinheit gefiltert wird. Mit dieser Filtereinheit können aber auch andere unerwünschte Signalanteile des Reflexionssignals weggefiltert werden, sodass das schwache Signal in der Reflexionsstrahlung, das durch die Gegenstandsbewegung hervorgerufen wird, möglichst nicht gestört wird.

Als Filtereinheit kann zwar eine analoge AC-Kopplung, d. h. beispielsweise ein analoges Filter verwendet werden, allerdings ist es mit einem solchen Filter schwierig, eine Grenzfrequenz von deutlich unter einem Hz zu erreichen. Dies ist allerdings notwendig, wenn sehr langsame Bewegungen des Objekts erfasst werden sollen. Mit Vorteil wird daher eine digitale DC-Kompensation des Mischsignals durchgeführt. Zu diesem Zweck umfasst die Filtereinheit eine Kompensatoreinheit, mit welcher aus dem Mischsignal der DC-Anteil entfernt werden kann. Dies erfolgt, indem mit der Auswerteeinheit ein momentaner Mittelwert des Mischsignals und daraus ein Kompensationssignal erzeugt wird, wobei das Kompensationssignal mit der Kompensatoreinheit dem Mischsignal additiv überlagerbar ist, sodass der resultierende DC-Anteil im Wesentlichen gleich Null wird. Dadurch lässt sich die untere Grenzfrequenz praktisch beliebig tief ansetzen, sodass auch sehr langsame Bewegungen des Objekt detektierbar sind.

Wie bereits erwähnt, werden solche Geräte typischerweise mit einer Batterie betrieben, sodass die Leistungsaufnahme solcher Geräte möglichst tief gehalten werden soll, um eine möglichst lange Lebensdauer der Batterie zu erreichen. Die Bewegungsermittlungsvorrichtung kann zwar kontinuierlich, d. h. ohne Unterbruch betrieben werden, benötigt hierbei aber dauernd Energie. Um den Energiebedarf zu senken, ist die Vorrichtung daher so ausgebildet, dass diese in einem Pulsbetrieb betreibbar ist. D. h. wenigstens eine ihrer aktiven Komponenten ist wahlweiseaktivier- und deaktivierbar. Mit Vorteil sind mehrere oder sogar alle ihrer aktiven Komponenten in diesem Pulsbetrieb betreibbar, wobei diese Komponenten beispielsweise periodisch, d. h. jeweils lediglich für einen Teil einer bestimmten Periodendauer eingeschaltet und während der restlichen Periodendauer ausgeschaltet werden können. Dieses Ein- und Ausschalten kann aber auch ereignisgesteuert erfolgen, beispielsweise zu bestimmten Uhrzeiten.

Für das Senden des Sendesignals und das Empfangen des Reflexionssignals umfasst die Bewegungsermittlungsvorrichtung typischerweise zwei Antennen, eine Sendeantenne und eine Empfangsantenne. Die Sendeantenne dient dazu, einen vorgegebenen Raumbereich zu bestrahlen, in dem von einem bewegten Gegenstand dessen Bewegung, eventuell mit Richtung und Geschwindigkeit bzw. Geschwindigkeitsverteilung ermittelt werden soll. Es kann auch lediglich nur ermittelt werden, ob ein irgendwie bewegter Gegenstand vorhanden ist. Ferner dient die Sendeantenne dazu, ein ermitteltes Bewegungssignal mit einer vorgegebenen Codierung oder ein Auslösesignal an eine in der Regel entfernte Ausführungsvorrichtung zu senden, welche dann, wie oben bereits erwähnt, eine Beleuchtungsein- oder ausschaltung, einen Wiederanlauf einer Rolltreppe usw. vornimmt.

Die Empfangsantenne wiederum dient zum Empfangen des vom bewegten Gegenstand sowie auch von stillstehenden Gegenständen reflektierten Sendesignals als Reflexionsstrahlung. Ferner nimmt die Empfangseinheit auch Signale auf, welche, wie unten ausgeführt ist, zur Justage oder Änderungen von Parametern in der Bewegungsvorrichtung verwendet werden.

Um den Platzbedarf bzw. die Herstellungskosten weiter zu senken, ist vorzugsweise nur noch eine Antenne vorgesehen, welche zum Senden und zum Empfangen ausgebildet ist. Hierfür verfügt die Bewegungsermittlungsvorrichtung weiter über einen Leistungsteiler und einen Richtkoppler, wobei das zu sendende Sendesignal zum Leistungsteiler geführt wird. Ein erster Anteil des Sendesignals wird dann vom Leistungsteiler zum Mischer geführt und ein zweiter Anteil des Sendesignals vom Leistungsteiler zum Richtkoppler und von diesem zur Antenne geführt. Die empfangene Reflexionsstrahlung wiederum wird zum Richtkoppler geführt, welcher daraus das Reflexionssignal auskoppelt und dieses zum Mischer weiterleitet, wo es mit dem ersten Anteil des Sendesignals gemischt wird.

Als Antenne der Bewegungsermittlungsvorrichtung kann im Prinzip jede Antenne verwendet werden, welche für das Senden bzw. Empfangen des Sendesignals bzw. des Reflexionssignals mit der verwendeten Trägerfrequenz geeignet ist. Um die Baugrösse des Geräts klein zu halten, werden typischerweise Antennen verwendet, welche in das Gehäuse des Geräts integriert werden können, beispielsweise Antennen, die auf einer Elektronik-Leiterplatte der Bewegungsermittlungsvorrichtung integriert werden können oder welche beispielsweise an das Gehäuse des Geräts angeschraubt werden können.

Bei einer vorteilhaften Ausführungsform der Erfindung ist die Antenne hingegen als so genanntes Leckkabel (engl.: leaky feeder line) ausgebildet. Solche Leckkabel sind typischerweise als abstrahlende Koaxialkabel ausgebildet und werden beispielsweise in Tunnels eingesetzt, um entlang dem Tunnel einen unterbrechungsfreien Funkverkehr zu gewährleisten. Mit einer solchen Antenne lassen sich Bewegungen im Nahbereich entlang dem Antennenkabel erfassen. Ja nach konkreter Ausgestaltung lassen sich beispielsweise Bewegungen im Bereich von einigen Zentimetern um das Kabel herum erfassen. Dadurch können beispielsweise eine Tor- oder Türkantenüberwachung realisiert werden, wo das Schliessen des Tores oder der Tür gestoppt wird, bevor wie mit üblichen Sensoren ein Widerstand im Antrieb detektiert wird. Auch ein berührungsloser Schalter könnte mit einem solchen Leckkabel realisiert werden.

Die Lösung der Aufgabe betreffend der Anordnung ist durch die Merkmale des Anspruchs 10 definiert. Die Anordnung umfasst wenigstens eine Bewegungsermittlungsvorrichtung wie vorgängig beschrieben sowie wenigstens eine Ausführungsvorrichtung. Mit wenigstens einer der Bewegungsermittlungsvorrichtungen ist hierbei eine Bewegung eines Objekts feststellbar, wobei als Reaktion auf die Bewegung des Objekts wie beschrieben ein Sendesignal mit einer Auslöseinformation aussendbar ist. Die Sendestrahlung mit der Auslöseinformation ist mit wenigstens einer der Ausführungsvorrichtungen empfangbar, wobei die Auslöseinformation aus dem Sendesignal ermittelbar und in Abhängigkeit der Auslöseinformation der gewünschte Vorgang initiierbar oder ausführbar ist.

Die Bewegungsermittlungsvorrichtungen und die Ausführungsvorrichtungen sind hierbei derart ausgebildet, dass sie alle das Sendesignal mit derselben Trägerfrequenz aussenden bzw. empfangen können. D. h. die Bewegungsermittlungsvorrichtungen können untereinander kommunizieren, indem sie ein entsprechend moduliertes Datensignal aussenden. Dadurch lässt sich mit solchen Geräten ein Netzwerk aufbauen. Werden die Ausführungsvorrichtungen ebenfalls mit entsprechenden Sendern ausgestattet, können auch diese untereinander sowie mit den Bewegungsermittlungsvorrichtungen kommunizieren und beispielsweise in das Netzwerk eingebunden werden.

Die Bewegungsermittlungsvorrichtung ist in der Regel eine als Gerät ausgebildete Einheit für sich; sie kann jedoch in seltenen Fällen auch zusammen mit einer Ausführungsvorrichtung, welche dann die oben angeführten Initiierungen, Ein- oder Ausschaltungen vornimmt, angeordnet werden. In der Regel ist jedoch von einer Anordnung mit wenigstens einer Bewegungsermittlungsvorrichtung und wenigstens einer Ausführungsvorrichtung an voneinander getrennten Orten auszugehen, wobei beide Orte typischerweise einige Zentimeter bis einige zehn Meter auseinander liegen können. Die beiden Orte müssen nicht in Sichtweite sein; sie können auch durch Wände oder Gegenstände voneinander getrennt sein. Gegenstände und Wände müssen jedoch mit Blick auf die verwendete Sendestrahlung derart sein, dass eine ausreichende Transmission noch gegeben ist.

Mehrere Bewegungsermittlungsvorrichtungen und nur eine Ausführungsvorrichtung wird man beispielsweise dann vorsehen, wenn mehrere Bewegungen an unterschiedlichen Orten einen einzigen Vorgang auslösen sollen. Es kann sich hier beispielsweise um eine ein- oder auszuschaltende Raumbeleuchtung, eine Einbruchssicherung, welche einen Alarm auslösen soll, um eine Raumüberwachung usw. handeln.

Es kann aber auch lediglich eine Bewegungsermittlungsvorrichtung auf mehrere Ausführungsvorrichtungen wirken, wie beispielsweise bei einer Einbruchsicherung, mit der einmal ein Alarm und eine von der Alarmeinheit entfernte Beleuchtung eingeschaltet werden soll.

Bei einer bevorzugten Ausführungsform der Erfindung umfasst die Anordnung weiter eine Zentraleinheit. Mit dieser ist eine weitere Sendestrahlung, welcher mittels einer Modulationseinheit ein Informationssignal aufprägbar ist, aussendbar, wobei die Sendestrahlung wiederum dieselbe Trägerfrequenz aufweist wie das von der wenigstens einen Bewegungsermittlungsvorrichtung aussendbare Sendesignal. Das Informationssignal ist von der wenigstens einen Bewegungsermittlungsvorrichtung und/oder der wenigstens einen Auslösevorrichtung empfangbar und natürlich auch auswertbar. Indem mit Hilfe dieses Informationssignals entsprechende Informationen an die wenigstens eine Bewegungsermittlungsvorrichtung bzw. die wenigstens eine Auslösevorrichtung übermittelt werden, sind diese Vorrichtungen beispielsweise parametrierbar.

Das Informationssignal dient beispielsweise zur Veränderung eines oder mehrerer Parameter der Bewegungsermittlungsvorrichtung, wobei mit der Empfangseinheit die Sendestrahlung mit aufgeprägter Information empfangbar und demodulierbar ist und gemäss dem demodulierten Signal der oder die Parameter einstellbar sind. Bei dem von der Zentraleinheit einzustellenden Parameter kann es sich nun um eine Einstellung der Detektionsempfindlichkeit handeln. Dies kann eine einmal vorzunehmende Justage bei der Installation sein. Eine von "extern" einzustellende Justage ist insbesondere dann von Vorteil, wenn die Bewegungsermittlungsvorrichtung an unzugänglichen Stellen angeordnet ist, um sie vor Vandalenakten zu schützen. Es kann sich aber auch um eine Nachjustierung von mehreren Ausführungsvorrichtungen zusammen handeln, wenn sich herausstellen sollte, dass eine einmal eingestellte Empfindlichkeit sich als nicht zweckmässig erwiesen hat.

Ausgehend von der Zentraleinheit der Anordnung wird man bei Ausführungsvorrichtungen analog zur Ausbildung mit Blick auf eine einstellbare Bewegungsermittlungsvorrichtung ebenfalls veränderbare Vorgangsparameter vorsehen. Als Vorgangsparameter ist beispielsweise die Schwenkgeschwindigkeit bei einem auf Annäherung arbeitenden Türöffner, der Wasserfluss bei automatischen Pissoirs, eine Helligkeitseinstellung bei einer Beleuchtung usw. anzusehen.

Sind die Bewegungsermittlungsvorrichtungen und/oder die Ausführungsvorrichtungen miteinander zu einem Netzwerk verbunden, lassen sich weitere Anwendungen realisieren. Wenn beispielsweise eine erste Bewegungsermittlungsvorrichtung eine Bewegung detektiert, kann es diese Information mittels ihres Sendesignals automatisch an die anderen Geräte weiterleiten, welche daraufhin beispielsweise automatisch gewisse Schwellwerte verändern sodass die Vorrichtung sensibler auf detektierte Bewegungen reagiert. Anstatt nur die Detektion einer Bewegung weiterzuleiten, kann die erste Bewegungsermittlungsvorrichtung beispielsweise aber auch direkt entsprechende Informationen zur Parametrierung der anderen Geräte aussenden.

Die Geräte und Vorrichtungen können nun natürlich auch so ausgebildet sein, dass sie die Parametrierung in einem selbstlernenden Prozess vornehmen können, wobei diese Prozesse entweder in jeder Vorrichtung separat ablaufen oder dieser Lernprozess gemeinsam im Netzverbund stattfindet.

Es können nicht nur Meldungen bei ermittelten Bewegungen erfolgen; es kann auch eine Meldung erfolgen, wenn keine Bewegung mehr vorhanden ist. Eine derartige Anordnung kann dann zum Erfassen von Gegenstandsbewegungen auf einem Transportband dienen, wobei eine Meldung abgegeben wird, sofern das Förderband stillsteht oder keine Gegenstände mehr transportiert werden.

Eine analoge Ausbildung kann z. B. bei Baustellen auf Strassenabschnitten installiert werden. Man wird dann mehrere Bewegungsermittlungsvorrichtungen entlang des Bauabschnittes bzw. bereits auch vor dem Bauabschnitt anordnen und sobald keine Bewegung mehr ermittelt wird, eine entsprechende Ampelsteuerung für die Gegenrichtung oder eine andere Fahrtrichtung vornehmen. Rotphasen können hiermit auf ein Minimum beschränkt werden.

Auch können Schwingungen und Vibrationen an Maschinen und Motoren ermittelt werden, welche dann an die entsprechende Ausführungsvorrichtung oder auch an die Zentraleinheit funktechnisch übertragen werden. Je nach ermitteltem Ergebnis kann dann auf einen Stillstand oder eine fehlerhaft laufende Maschine bzw. Motor geschlossen werden.

Die Lösung der Aufgabe betreffend das Verfahren ist durch die Merkmale des Anspruchs 12 definiert. Bei dem Verfahren zum Auslösen eines Vorgangs mit einer Bewegungsermittlungsvorrichtung infolge einer Bewegung eines Objekts, wird mit einer Sende-/Empfangseinheit eine Sendestrahlung ausgesendet, welche ein Sendesignal mit einer Trägerfrequenz im Bereich von einigen MHz bis einigen hundert GHz umfasst. Die Sendestrahlung wird von dem Objekt als Reflexionsstrahlung reflektiert und die Reflexionsstrahlung wird mit der Sende-/Empfangseinheit empfangen. Aus der Reflexionsstrahlung wird ein Reflexionssignal ermittelt und die Bewegung des Objektes wird festgestellt, indem das Reflexionssignal mit einer Auswerteeinheit ausgewertet wird. Mit der Auswerteeinheit wird dann in Abhängigkeit des Reflexionssignals, d. h. in Abhängigkeit der Bewegung des Objekts eine Auslöseinformation erzeugt und der Vorgang ausgelöst, indem die Auslöseinformation mit der Sende-/Empfangseinheit als Sendestrahlung ausgesendet wird. Diese wird von einer Ausführungsvorrichtung empfangen, ausgewertet und der Vorgang wird schliesslich von der Ausführungsvorrichtung in Abhängigkeit der Auslöseinformation initiiert oder ausgeführt.

Gemäss der Erfindung wird nun das Verfahren mit einer Bewegungsermittlungsvorrichtung durchgeführt, bei welcher die Sende-/Empfangseinheit sowie die Auswerteeinheit als integrierte Schaltung auf einem einzigen Chip realisiert sind. Weiter wird die Sendestrahlung mit einer maximalen Sendeleistung von einem Watt erp, insbesondere einer Sendeleistung von weniger als 100 Milliwatt erp, ausgestrahlt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend wird die Erfindung anhand einiger Beispiele und Zeichnungen näher erläutert. Die zur Erläuterung der Ausführungsbeispiele verwendeten Zeichnungen zeigen:
- Fig. 1: ein Blockschaltbild einer Ausführungsvariante der erfindungsgemässen Bewegungsermittlungsvorrichtung;
- Fig. 2: eine beispielsweise hardwaremässige Verwirklichung der in Figur 1 dargestellten Bewegungsermittlungsvorrichtung;
- Fig. 3: ein Beispiel einer erfindungsgemässen Bewegungsermittlungsvorrichtung mit einer DC-Kompensation;
- Fig. 4: ein Beispiel einer erfindungsgemässen Bewegungsermittlungsvorrichtung mit einer kombinierten Sende-/Empfangsantenne;
- Fig. 5: ein Beispiel einer erfindungsgemässen Bewegungsermittlungsvorrichtung für einen gepulsten Betrieb;
- Fig. 6: eine erfindungsgemässe Bewegungsermittlungsvorrichtung mit einem Leckkabel als Antenne und
- Fig. 7: eine Vorrichtung zur aktiven Identifizierung eines Objekts mit Hilfe einer erfindungsgemässen Bewegungsermittlungsvorrichtung.

Grundsätzlich sind in den Figuren gleiche Teile mit gleichen Bezugszeichen versehen.

### Wege zur Ausführung der Erfindung

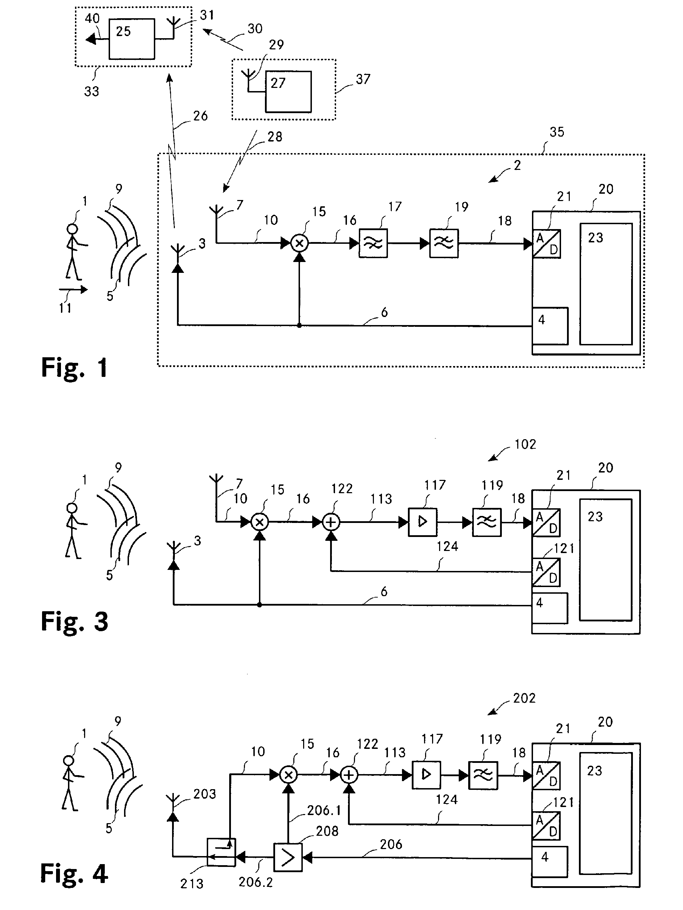

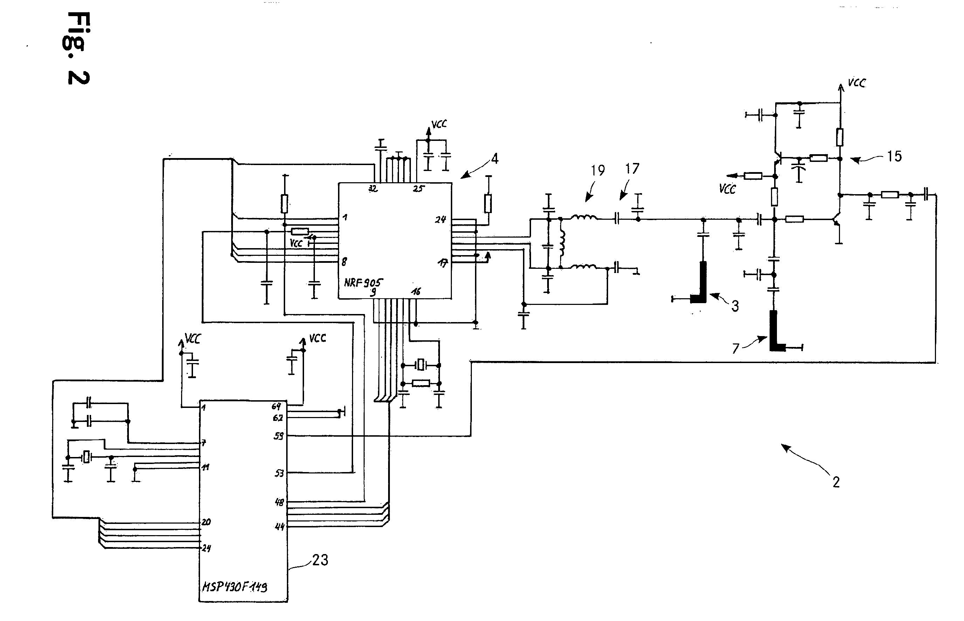

Eine in Figur 1 in einem Blockschaltbild dargestellte Ausführungsvariante einer erfindungsgemässen Bewegungsermittlungsvorrichtung 2 zur Ermittlung einer Bewegung eines Gegenstands, hier einer Person 1, hat eine Sendeeinheit 4 mit einer Sendeantenne 3 zum Aussenden eines Sendesignals 6 in Form einer Sendestrahlung 5 sowie eine Empfangseinheit mit einer Empfangsantenne 7 zum Empfang einer von der Person 1 reflektierten, symbolisch dargestellten Reflexionsstrahlung 9, aus welcher mit der Empfangsantenne 7 das Reflexionssignal 10 empfangen wird. Die Empfangseinheit und die Sendeeinheit sind als gemeinsame integrierte Schaltung auf einem gemeinsamen Chip untergebracht (so genannter SRD single-Chip). Die Bewegungsermittlungsvorrichtung 2 befindet sich an einem ersten Ort 35.

Die Strahlungsparameter der Reflexionsstrahlung 9 ändern sich gegenüber den entsprechenden Strahlungsparametern der Sendestrahlung 5 infolge der durch einen Richtungspfeil angedeuteten Bewegung 11 der Person 1. Die Bewegungsermittlungsvorrichtung 2 hat eine Auswerteeinheit 20 mit einem Analog-Digital-Wandler 21 und einem Microcontroller 23. Die Auswerteeinheit 20 ist signalmässig sowohl mit der Sendeeinheit 4 als auch mit der Empfangseinheit verbunden. Mit der Auswerteeinheit 20 ist wenigstens ein durch die Bewegung 11 veränderter Strahlungsparameter der Reflexionsstrahlung 9 ermittelbar. Wird eine Bewegung 11 der Person 1 ermittelt, wird über die Sendeantenne 3 der Sendeeinheit eine Auslöseinformation mit derselben Sendestrahlung (d. h. mit derselben Trägerfrequenz wie das Sendesignal 6) ausgesendet.

Das zur Sendeantenne 3 geführte Sendesignal 6 arbeitet bei der Bewegungsermittlung mit einer konstanten Trägerfrequenz je nach Einsatzgebiet von beispielsweise, wie bereits eingangs ausgeführt, mit 433 MHz, 868 MHz, 915 MHz oder 2,4 GHz. Das Sendesignal 6 wird aber nicht nur auf die Sendeantenne 3, sondern auch auf einen Mischer 15 geführt. Die Reflexionsstrahlung 9 hat gegenüber der Sendestrahlung 5 je nach Reflexionsfaktor eine verringerte Amplitude, eine Phasenverschiebung aufgrund der Laufzeit und aufgrund der Bewegung eine veränderte Momentanfrequenz f ± Δf_{D}, wobei f die Trägerfrequenz und Δf_{D} die Dopplerfrequenz ist. Das mit der Empfangsantenne 7 empfangene Reflexionssignal 9 wird ebenfalls auf den Mischer 15 gegeben. Hat keine Bewegung stattgefunden, sind die Frequenzen von Sendestrahlung 5 und Reflexionsstrahlung 9 gleich und am Ausgang des Mischers 15 resultiert ein Mischsignal 16 von 0 Hz. Hat jedoch eine Bewegung der Person 1 stattgefunden, so ist die Frequenz der Reflexionsstrahlung 9 erhöht, falls eine Bewegung auf die Bewegungsermittlungsvorrichtung 2 hin und erniedrigt wenn eine Bewegung von ihr weg stattgefunden hat. Durch eine Mischung der elektrischen Signale der gesendeten und der empfangenen Strahlung entstehen somit im Mischsignal 16 am Ausgang des Mischers 15 Frequenzkomponenten, welche im Frequenzbereich der "Bewegungsfrequenz" der Person 1 liegen. Werden solche Frequenzkomponenten mit ausreichender Intensität, während einer ausreichend langen Zeitdauer ermittelt, lässt sich auf eine bewegte Person 1 im Sendebereich der beiden Antennen 3 und 7 schliessen. Mit einer Filterung durch Verwendung eines Hochpasses 17 und eines Tiefpasses 19 am Ausgang des Mischers 15 wird der interessierende Frequenzbereich im Mischsignal 16 hervorgehoben. Das derart gefilterte Mischsignal 18 wird mit dem Analog-Digital-Wandler 21 digitalisiert und dann mit dem Microcontroller 23 weiter verarbeitet. Die digitale Signalverarbeitung mit dem Microcontroller 23 erfolgt beispielsweise in Form eines programmierten Algorithmus, ist also mit Software realisiert und kann eine weitere ggf. adaptive Filterung, eine Frequenzanalyse (Fast Fourier Transformation), eine Störungsaustastung usw. umfassen.

Sind vom Microcontroller 23 ausreichend Merkmale für eine bewegte Person 1 im Sendebereich ermittelt worden, liegt ein so genanntes Bewegungsereignis, oder einfach ein Ereignis vor. Beim Vorliegen des Ereignisses wird je nach Ausbildung einer entfernten Ausführungsvorrichtung 25 an einem zweiten Ort 33 dem Sendesignal der Sendestrahlung, welche hier zur besseren Kennzeichnung als Sendestrahlung 26 bezeichnet wird, eine Amplitudenmodulation, eine Pulscodemodulation oder eine Frequenzmodulation aufgeprägt. Die Sendestrahlung 26 wird über die Sendeantenne 3 ausgesendet und von einer Empfangseinheit 31 der Ausführungsvorrichtung 25 empfangen, wobei von dieser beispielsweise ein entsprechendes elektrisches Signal 40 erzeugt und mit diesem Signal 40 ein Vorgang ausgelöst wird. Je nach Entfernung zwischen der Bewegungsermittlungsvorrichtung 2 an dem ersten Ort 35 und der Ausführungsvorrichtung 25 am zweiten Ort 33 kann nun die Sendeantenne 3 als Raumstrahler oder als Raumstrahler mit einer bevorzugten Ausstrahlungsrichtung in den Bereich einer zu erwartenden Gegenstandsbewegung und einer Richtkeule zur Ausführungsvorrichtung 25 ausgebildet werden. Um die Bewegungsermittlungsvorrichtung 2 preisgünstig gestalten zu können, soll nämlich eine möglichst geringe Sendeleistung, beispielsweise eine Sendeleistung im Bereich von einigen Milliwatt erp, verwendet werden, welche auch für eine Informationsübermittlung an eine Ausführungsvorrichtung nicht erhöht werden sollte. Es funktioniert alles mit ein und derselben Trägerfrequenz und vorzugsweise mit ein und derselben Sendeleistung.

Figur 1 zeigt weiter eine räumlich entfernte, sich an einem dritten Ort 37 befindliche Zentraleinheit 27, welche mittels einer Sendeeinheit 29 eine Sendestrahlung 28 aussendet. So wie die Ausführungsvorrichtung 25 über die Sendestrahlung 26 Informationen empfangen kann, kann die Bewegungsermittlungsvorrichtung 2 mit ihrer Empfangsantenne 7 in einer bevorzugten Ausführungsvariante Informationen auch über die Sendestrahlung 28 von der Zentraleinheit 27 empfangen, wobei die Sendestrahlung 28 mit gleicher Trägerfrequenz wie die eigene Sendestrahlung 5 bzw. 26 ausgestrahlt wird. Analog kann auch die Ausführungsvorrichtung 25 derartige Informationen von der Zentraleinheit 27 über eine Sendestrahlung 30 mit wiederum derselben Trägerfrequenz empfangen. Mit diesen Informationen können beispielsweise die Bewegungsermittlungsvorrichtung 2 und/oder die Ausführungsvorrichtung 25 parametriert werden. D. h. bei der Bewegungsermittlungsvorrichtung 2 können beispielsweise Detektionsschwellen verändert werden oder es können bei der Ausführungsvorrichtung 25 Einstellungsparameter für zu steuernde Mittel übertragen werden. Auch können abgespeicherte Daten abgerufen werden.

In Figur 2 ist eine Bewegungsermittlungsvorrichtung 2 in einer beispielhaften Hardwarekonfiguration dargestellt, wobei sich die Bezugszeichen auf die vorgängig mit Bezug auf Figur 1 beschriebenen, blockartig dargestellten Elemente bzw. Bausteine beziehen.

Figur 3 zeigt eine weitere Ausführungsvariante einer erfindungsgemässen Bewegungsermittlungsvorrichtung 102 mit einer Kompensatoreinheit 122 zur DC-Kompensation des Mischsignals 16. Mit Hilfe eines digitalen Regelalgorithmus des Microcontrollers 23 wird nach dem Analog-Digital-Wandler 21 ein über längere Zeit gemittelter Gleichspannungswert des gefilterten Mischsignals 18 und daraus mit einem Digital-Analog-Wandler 121 ein Korrektursignal, beispielsweise eine Kompensationsspannung 124, bestimmt, welche mittels der Kompensatoreinheit 122, die z. B. einen Addierer umfasst, dem Mischsignal 16 überlagert wird, sodass aus dem Mischsignal 16 der DC-Anteil möglichst entfernt wird. D. h. zum Mischsignal wird durch die Kompensationsspannung quasi ein Offset addiert.

Das Ziel dieses digitalen Regelalgorithmus ist es, dass der über längere Zeit gemittelte Gleichspannungswert des gefilterten Mischsignals 18 möglichst in der Mitte des Aussteuerbereichs des Analog-Digital-Wandlers 21 gehalten wird. Dies wird dadurch erreicht, dass zur Bestimmung des gemittelten Gleichspannungwertes das gefilterte Mischsignal 18 nach der A/D-Wandlung mit einem digitalen Tiefpassfilter (IIR, infinite impulse response) gefiltert wird, das eine Grenzfrequenz weiter unter einem Hz, beispielsweise bei 0.02 Hz aufweist. Dann wird festgestellt, wie stark und in welche Richtung der so bestimmte Mittelwert von der Mitte des Aussteuerbereichs des A/D-Wandlers 21 abweicht. Entsprechend dieser Abweichung wird dann die Kompensationsspannung 124 derart korrigiert, dass der DC-Anteil des Mischsignals 16 verringert wird. Die Kompensationsspannung 124 kann wahlweise kontinuierlich oder vorzugsweise periodisch, beispielsweise ein Mal pro Sekunde, korrigiert werden. Die Korrektur der Kompensationsspannung 124 kann so erfolgen, dass die Kompensationsspannung 124 jeweils mit der gesamten Abweichung des Mittelwerts von der Aussteuermitte erfolgt. Vorzugsweise wird jedoch die Kompensationsspannung 124 bei jedem Schritt um einen festen Wert, beispielsweise um ± 0.1 Volt korrigiert. Dadurch wird ein langsamer Regelalgorithmus erreicht. Das korrigierte Mischsignal 113 wird dann noch mit einem Verstärker 117 verstärkt und mit einem Tiefpassfilter 119 gefiltert.

Der Vorteil dieses Verfahrens gegenüber einer ebenfalls möglichen AC-Kopplung mit einem analogen Hochpassfilter ist, dass wesentlich tiefere Grenzfrequenzen realisiert werden können. Für die Bewegungsdetektion heisst das, dass wesentlich langsamere Bewegungen eines Objekts wie beispielsweise der Person 1 erfasst werden können.

In Figur 4 ist ein weiteres Beispiel einer erfindungsgemässen Bewegungsermittlungsvorrichtung 202 dargestellt, welche eine kombinierte Sende-/Empfangsantenne 203 aufweist. Damit mit dieser Sende-/Empfangsantenne 203 sowohl die Sendestrahlung 5 ausgestrahlt und die Reflexionsstrahlung 9 empfangen werden kann, umfasst die Bewegungsermittlungsvorrichtung 202 weiter einen Richtkoppler 213 sowie einen Leistungsteiler 208 (power splitter), mit welchem das Sendesignal 206 in zwei Anteile aufgesplittet wird, wobei ein erster Anteil 206.1 des Sendesignals 206 zum Mischer 15 und ein zweiter Anteil 206.2 zum Richtkoppler 213 und von dort weiter zur Sende-/Empfangsantenne 203 geführt und von dieser abgestrahlt wird. Die Reflexionsstrahlung 9 wird mit der Sende-/Empfangsantenne 203 empfangen, wobei das Reflexionssignal 210 mittels des Richtkopplers 213 ausgekoppelt und zum Mischer 15 geführt und von diesem mit dem ersten Anteil 206.1 des Sendesignals 206 gemischt wird.

In einem anderen Beispiel kann der Richtkoppler 213 durch einen weiteren Leistungsteiler ersetzt werden. Dieser ist dann z. B. derart ausgebildet, dass er drei Anschlüsse umfasst, welche sowohl als Ein- als auch als Ausgänge benutzt werden können. D. h. ein Signal, welches an einem der drei Anschlüsse angelegt wird, wird mit einem vorgegebenen, einstellbaren Teilungsverhältnis auf die beiden anderen Anschlüsse aufgeteilt. Entsprechend würde der zweite Anteil 206.2 des Sendesignals 206 anteilmässig zum Mischer 15 und zur Sende-/Empfangsantenne 203 und das empfangene Reflexionssignal 10 anteilmässig zum Mischer 15 sowie zum Leistungsteiler 208 aufgeteilt.

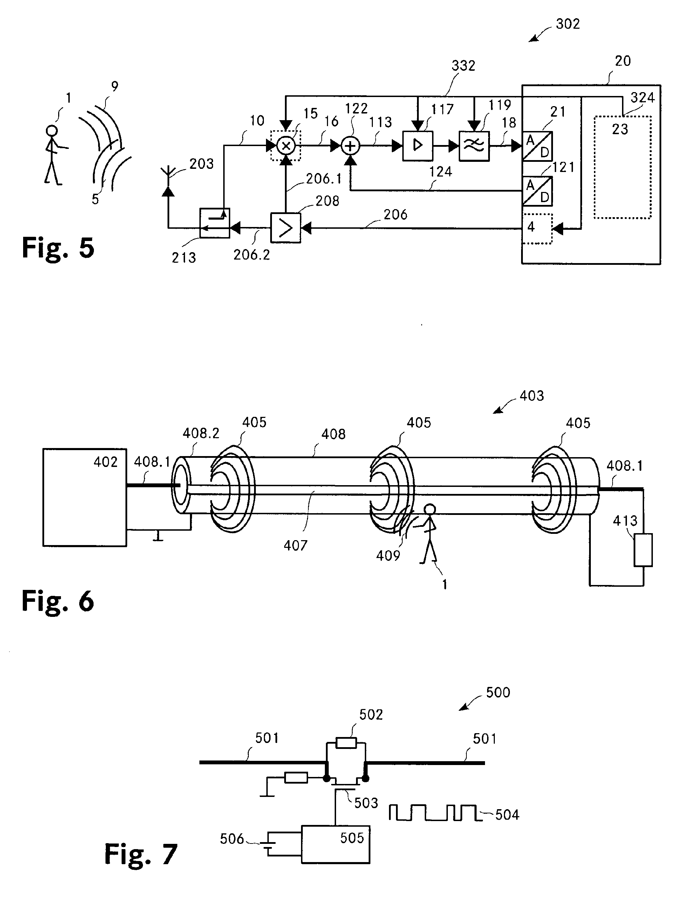

Figur 5 zeigt ein weiteres Beispiel einer erfindungsgemässen Bewegungsermittlungsvorrichtung 302, welche für einen gepulsten Betrieb ausgerüstet ist. Der Microcontroller 23 umfasst in diesem Beispiel einen Steuerausgang 324, über welchen ein vom Microcontroller 23 erzeugtes Steuersignal 332 an einige oder sämtliche aktiven Komponenten der Bewegungsermittlungsvorrichtung 302 übermittelt weden kann. Mit diesem Steuersignal 332 können diese aktiven Komponenten wie etwa der Mischer 15, der Verstärker 117, das Tiefpassfilter 119 oder auch die Sendeeinheit 4 und die Empfangseinheit periodisch ein- und wieder ausgeschaltet, d. h. aktiviert bzw. deaktiviert werden. Indem diese aktiven Komponenten nur für einen Teil der Zeit aktiv sind, kann die Leistungsaufnahme der gesamten Bewegungsermittlungsvorrichtung 302 stark verringert werden.

Figur 6 zeigt eine erfindungsgemässe Bewegungsermittlungsvorrichtung 402, welche eine kombinierte Sende-/Empfangsantenne 403 umfasst, die als Leckkabel 408 ausgebildet ist. Das Leckkabel umfasst beispielsweise ein Koaxialkabel mit einem Innenleiter 408.1 und einem Aussenleiter 408.2, wobei der Aussenleiter 408.2 einen Längsschlitz 407 aufweist.

Die Bewegungsermittlungsvorrichtung 402 ist an einem Ende des Leckkabels 408 an den Innenleiter 408.1 sowie an den geerdeten Aussenleiter 408.2 angeschlossen und am anderen Ende des Leckkabels 408 ist dieses mit einem Leitungsabschluss 413 versehen, welcher zwischen den Innenleiter 408.1 und den Aussenleiter 408.2 geschaltet ist.

Entlang dem Längsschlitz 407 des Leckkabels 408 bildet sich bei der Abstrahlung der Sendestrahlung 405 eine Sendekeule aus, welche sich vom Längsschlitz 407 her ausbreitet.

Die Sendestrahlung 405 schwächt sich jedoch mit zunehmender Entfernung vom Längsschlitz 407 stark ab, sodass mit einem solchen Leckkabel 408 lediglich Bewegungen eines Objekts wie der angedeuteten Person 1 im Nahbereich des Leckkabels 408, d. h. in einem Bereich von wenigen Zentimetern, detektiert werden können, indem die von der Person 1 reflektierte Sendestrahlung 405 wiederum als Reflexionsstrahlung 409 von dem Leckkabel 408 empfangen wird.

Mit einem Leckkabel von etwa 50 cm Länge hat sich eine gute Empfindlichkeit bei Distanzen von etwa 2 bis 5 Zentimetern gezeigt. Bei grösseren Distanzen ist die Empfindlichkeit sehr klein, weshalb diese Fälle gut unterscheidbar sind.

Ein solches Leckkabel kann in vielen verschiedenen Anwendungen eingesetzt werden. Bei einem Rolltor kann damit beispielsweise ein Einklemmschutz realisiert werden. Die Bewegungsermittlungsvorrichtung wird beispielsweise am unteren Ende des Rolltors montiert, wobei das Leckkabel am unteren Rand des Rolltores befestigt wird, sodass die Sendekeule des Leckkabels nach unten gerichtet ist und so festgestellt weden kann, ob sich im Schliessbereich des Rolltores ein (sich bewegender) Gegenstand befindet. Falls ja, wird diese Information als Auslöseinformation zur Auslösevorrichtung gesendet, welche sich in diesem Beispiel beim Antrieb bzw. der Steuerung des Rolltores befindet und entsprechend der Auslöseinformation beispielsweise das Schliessen des Rolltores stoppt. Auf diese Weise kann das Tor gestoppt werden, bevor es mit der Person tatsächlich in Berührung kommt. So kann die Verletzungsgefahr sehr gering gehalten werden.

Bei einem Kipptor kann ein sehr ähnlich funktionierender Einklemmschutz realisiert werden, indem das Leckkabel am unteren Ende des Kipptores installiert wird.

Auch bei Flügeltüren ist ein solcher Einklemmschutz realisierbar, indem ein Leckkabel beispielsweise an einer Vertikalkante des Flügelblattes oder auch scharnierseitig an einem vertikalen Holmen des Türzargens installiert wird.

Die Erfindung kann auch als Türöffner eingesetzt werden, indem als Antenne beispielsweise eine Richtantenne verwendet wird, die mit einem Erfassungsbereich von ca. 60° oberhalb der Türe installiert wird. Die Antenne umfasst beispielsweise ein Patcharray als Richtantenne mit einem -3 dB Öffnungswinkel von ca. ± 20°.

Die Erfindung kann beispielsweise auch als Ersatz von so genannten Kontaktmatten verwendet werden. Solche Matten werden üblicherweise in Gefahrenbereichen ausgelegt, wobei in der Matte ein Kontakt hergestellt wird, wenn beispielsweise eine Person auf die Matte tritt. Dies wird von einer Steuervorrichtung registriert, welche mit der Matte über ein Kabel verbunden ist. Mit einer erfindungsgemässen Bewegungsermittlungsvorrichtung kann nun eine ebensolche Funktion erreicht werden, indem deren Sende-/Empfangsantenne als Folie in der Matte ausgebildet ist, mit welcher eine Bewegung im Nahbereich der Folie registriert und per moduliertem Sendesignal an die Steuervorrichtung übermittelt werden kann. D. h. auch hier entfällt das Kabel zwischen der Matte und der Steuerung.

Mit einer erfindungsgemässen Bewegungsermittlungsvorrichtung kann beispielsweise auch eine aktive Identifikation eines Objekts realisiert werden.

Figur 7 zeigt beispielhaft eine derartige, aktive identifikationsvorrichtung 500 zur aktiven Identifizierung eines Objekts mit Hilfe einer erfindungsgemässen Bewegungsermittlungsvorrichtung. Die Identifikationsvorrichtung 500 umfasst eine Dipolantenne 501, welche auf die entsprechende Trägerfrequenz des Sendesignals der Bewegungsermittlungsvorrichtung abgestimmt und am Fusspunkt mit einer Wellenimpedanz 502 abgestimmt ist. Parallel zur Wellenimpedanz wird ein Transistor 503, beispielsweise ein Feldeffekttransistor, mit Source und Drain geschaltet. Das Gate des Transistors 503 wird von einem von einer Batterie 506 gespiesenen Microcontroller 505 mit einer binären identifikationssequenz 504 angesteuert.

In Abhängigkeit des aktuellen Logikpegels am Gate des Transistors 503 in Funktion der Identifikationssequenz 504, d. h. in Abhängigkeit der binären Pegel der identifikationssequenz 504, ändert der Transistor 503 seinen Widerstand zwischen Drain und Source, womit gleichzeitig die Reflexions-Charakteristik der Dipolantenne 501 grundlegend verändert wird. Ist der Transistor 503 beispielsweise offen, ist diese mit dem Wellenwiderstand abgeschlossen, sodass sie möglichst wenig reflektiert. Ist der Transistor 503 hingegen geschlossen, sind die Fusspunkte der Antenne kurzgeschlossen und die Antenne reflektiert stark. Entsprechend kann diese Identifikationssequenz 504 von der erfindungsgemässen Bewegungsermittlungsvorrichtung in dem von der aktiven identifikationsvorrichtung 500 reflektierten Reflexionssignal detektiert und die so detektierte Identifikationssequenz kann einem entsprechenden Identifikations-Tag und damit beispielsweise einer bestimmten Person zugeordnet werden. Indem der Transistor 503 periodisch mit der Identifikationssequenz 504 angesteuert wird, kann beispielsweise eine Zugangskontrolle realisiert werden, bei welcher beispielsweise eine Tür für eine bestimmte Person nur dann geöffnet wird, wenn die empfangene identifikationssequenz zu demjenigen Identifikations-Tag gehört, welches dieser Person zugeordnet ist.

Da nur der Microconttroller 505 an die Batterie angeschlossen ist, kann eine sehr stromsparende Lösung realisiert werden. Bei einem Stromverbrauch von z. B. 2 Mikroampère kann diese Schaltung mit einer herkömmlichen Knopfzelle jahrelang betrieben werden.

Eine weitere Anwendungsmöglichkeit der Erfindung ist bei so genannten Lichtschranken oder -vorhängen, bei welchen typischerweise ein oder mehrere Lichtstrahlen mit entsprechenden Sensoren verwendet werden, um festzustellen, ob sich im Strahlbereich der Lichtstrahlen eine Person oder ein Gegenstand befindet. Diese Funktionalität kann nun auch mit einer erfindungsgemässen Bewegungsermittlungsvorrichtung erreicht werden, wobei in Abhängigkeit einer festgestellten Bewegung eine bestimmte Aktion ausgeführt, beispielsweise eine Tür geöffnet werden kann.

In Kombination mit einer weiter oben beschriebenen aktiven Identifikationsvorrichtung kann quasi auch eine Funk-Schranke betrieben werden. Auf einer Seite wird die Bewegungsermittlungsvorrichtung und auf der anderen Seite fix ein entsprechendes Identifikations-Tag montiert, wobei Objekte, die sich zwischen der Bewegungsermittlungsvorrichtung und dem Identifikations-Tag befinden, zuverlässig detektiert werden können.

Zusammenfassend ist festzustellen, dass es die Erfindung erlaubt, eine Vorrichtung anzugeben, welche einfach und günstig hergestellt werden kann, günstig im Unterhalt ist und enorm vielseitig eingesetzt werden kann.

## Patentansprüche

1. Bewegungsermittlungsvorrichtung (2) zur Auslösung eines Vorgangs infolge einer Bewegung (11) eines Objekts (1), mit einer Sende-/Empfangseinheit (4) und einer Auswerteeinheit (20), wobei
a) mit der Sende-/Empfangseinheit eine Sendestrahlung (5) aussendbar und die vom Objekt (1) reflektierte Sendestrahlung als Reflexionsstrahlung (9) empfangbar ist, wobei die Sendestrahlung ein Sendesignal mit einer Trägerfrequenz im Bereich von einigen MHz bis einigen hundert GHz, insbesondere im Mikrowellenbereich, umfasst,
b) aus der Reflexionsstrahlung (9) ein Reflexionssignal (10) ermittelbar und die Bewegung (11) des Objekts (1) durch eine Auswertung des Reflexionssignals (10) mit der Auswerteeinheit (20) feststellbar ist,
c) mit der Auswerteeinheit (20) in Abhängigkeit der Bewegung (11) des Objekts (1) eine Auslöseinformation erzeugbar und der Vorgang auslösbar ist, indem die Auslöseinformation mit der Sende-/Empfangseinheit (4) als Sendestrahlung (26) aussendbar ist,
**dadurch gekennzeichnet, dass** die Sende-/Empfangseinheit (4) als integrierte Schaltung auf einem Halbleiterchip realisiert ist und eine maximale Sendeleistung von einem Watt erp, insbesondere eine Sendeleistung von weniger als 100 Milliwatt erp, aufweist, und die Auswerteeinheit (20) als integrierte Schaltung auf einem Halbleiterchip realisiert ist, wobei die Sende-/Empfangseinheit (4) und die Auswerteeinheit (20) insbesondere gemeinsam auf einem einzigen Halbleiterchip realisiert sind.

2. Bewegungsermittlungsvorrichtung nach Anspruch 1, wobei diese zur drahtlosen Übertragung von Daten eine Modulationseinheit umfasst, mit welcher die zu übertragenden Daten dem von der Sende-/Empfangseinheit (4) aussendbaren Sendesignal (6) aufmodulierbar sind und das derart modulierte Sendesignal zur Feststellung der Bewegung (11) des Objekts (1) verwendbar ist.

3. Bewegungsermittlungsvorrichtung nach einem der Ansprüche 1-2, wobei die Auswerteeinheit (20) eine Diskriminationseinheit umfasst, mit welcher ein Strahlungsparameter des Reflexionssignals (10) mit wenigstens einem Schwellenparameter vergleichbar ist und die Auslöseinformation erzeugbar ist, wenn der Strahlungsparameter nicht in einem durch die Schwellenparameter vorgegebenen Parameterbereich liegt.

4. Bewegungsermittlungsvorrichtung nach einem der Ansprüche 1-3, mit einer Filtereinheit (17, 19), wobei dem Sendesignal die Auslöseinformation mit der Modulationseinheit aufmodulierbar ist, insbesondere als Phasen-, Frequenz- oder GFSK-Modulation, und mit der Filtereinheit (17, 19) die von einer Modulation mit der Modulationseinheit herrührenden Signalanteile aus dem Reflexionssignal (10) wegfilterbar sind.

5. Bewegungsermittlungsvorrichtung nach Anspruch 4, wobei sie eine Mischereinheit (15) umfasst, mit welcher durch Mischen des Sendesignals (6) mit dem Reflexionssignal (10) ein Mischsignal (16) erzeugbar ist, und das Mischsignal (16) mit der Filtereinheit (17, 19) filterbar ist.

6. Bewegungsermittlungsvorrichtung (102) nach Anspruch 5, wobei die Filtereinheit eine Kompensatoreinheit (122) umfasst, wobei zur Ermittlung von sehr langsamen Bewegungen des Objekts (1) mit der Kompensatoreinheit (122) ein DC-Anteil aus dem Mischsignal (16) entfernbar ist, indem mit der Auswerteeinheit (20) ein momentaner Mittelwert des Mischsignals (16) bestimmbar, aus dem momentanen Mittelwert ein Kompensationssignal (124) erzeugbar und mit der Kompensatoreinheit (122) das Kompensationssignal (124) dem Mischsignal (16) additiv überlagerbar ist.

7. Bewegungsermittlungsvorrichtung (302) nach einem der Ansprüche 1-6, wobei diese in einem Pulsbetrieb betreibbar ist, in welchem wenigstens eine, vorzugsweises alle, ihrer aktiven Komponenten (15, 117, 119, 4) wahlweise aktivier- und deaktivierbar ist bzw. sind.

8. Bewegungsermittlungsvorrichtung (202) nach einem der Ansprüche 1-7, wobei diese genau eine Antenne (203) sowie einen Leistungsteiler (208) und einen Richtkoppler (213) umfasst, wobei das zu sendende Sendesignal (206) zum Leistungsteiler (208) führbar ist, ein erster Anteil (206.1) des Sendesignals (206) vom Leistungsteiler (208) zum Mischer (15) und ein zweiter Anteil (206.2) des Sendesignals (206) vom Leistungsteiler (208) zum Richtkoppler (213) und von diesem zur Antenne (203) führbar ist und das empfangene Reflexionssignal (10) mit dem Richtkoppler (213) aus der Reflexionsstrahlung (9) auskoppelbar und zum Mischer (15) führbar ist.

9. Bewegungsermittlungsvorrichtung (402) nach einem der Ansprüche 1-8, mit einer als Leckkabel (408) ausgebildeten Antenne.

10. Anordnung mit wenigstens einer Bewegungsermittlungsvorrichtung (2) nach einem der vorgenannten Ansprüche und wenigstens einer Ausführungsvorrichtung (25), wobei mit wenigstens einer der Bewegungsermittlungsvorrichtungen (2) eine Bewegung (11) eines Objekts (1) feststellbar und als Reaktion auf die Bewegung (11) des Objekts (1) mit einer Sendestrahlung (26) ein Sendesignal (6) mit einer Auslöseinformation aussendbar ist, wobei das Sendesignal (6) von sämtlichen Bewegungsermittlungsvorrichtungen mit derselben Trägerfrequenz aussendbar ist, die Sendestrahlung (26) mit wenigstens einer der Ausführungsvorrichtungen (25) empfangbar und die Auslöseinformation aus dem Sendesignal ermittelbar ist, und in Abhängigkeit der Auslöseinformation ein Vorgang initiierbar oder ausführbar ist.

11. Anordnung nach Anspruch 10, wobei die Anordnung eine Zentraleinheit (27) umfasst, mit welcher eine weitere Sendestrahlung (28, 30) mit einem Informationssignal derselben Trägerfrequenz wie das von der wenigstens einen Bewegungsermittlungsvorrichtung (2) aussendbare Sendesignal aussendbar ist, und das Informationssignal von der wenigstens einen Bewegungsermittlungsvorrichtung (2) und/oder der wenigstens einen Auslösevorrichtung (25) empfangbar und auswertbar ist, und die wenigstens eine Bewegungsermittlungsvorrichtung (2) bzw. die wenigstens eine Auslösevorrichtung (25) mit einer in dem Informationssignal übertragenen Information parametrierbar ist.

12. Verfahren zum Auslösen eines Vorgangs mit einer Bewegungsermittlungsvorrichtung (2) infolge einer Bewegung (11) eines Objekts (1), wobei
a) mit einer Sende-/Empfangseinheit (4) eine Sendestrahlung (5) ausgesendet wird, welche ein Sendesignal (6) mit einer Trägerfrequenz im Bereich von einigen MHz bis einigen hundert GHz umfasst, die Sendestrahlung von dem Objekt als Reflexionsstrahlung (9) reflektiert und die Reflexionsstrahlung mit der Sende-/Empfangseinheit (4, 7) empfangen wird,
b) aus der Reflexionsstrahlung (9) ein Reflexionssignal (10) ermittelt und die Bewegung (11) des Objektes (1) festgestellt wird, indem das Reflexionssignal (10) mit einer Auswerteeinheit (20) ausgewertet wird,
c) mit der Auswerteeinheit (20) in Abhängigkeit der Bewegung (11) des Objekts (1) eine Auslöseinformation erzeugt wird und der Vorgang ausgelöst wird, indem die Auslöseinformation mit der Sende-/Empfangseinheit (4) als Sendestrahlung (26) ausgesendet, von einer Ausführungsvorrichtung (25) empfangen, ausgewertet und der Vorgang von der Ausführungsvorrichtung (25) in Abhängigkeit der Auslöseinformation initiiert oder ausgeführt wird,
**dadurch gekennzeichnet, dass** die Sendestrahlung (5) mit einer maximalen Sendeleistung von einem Watt erp, insbesondere einer Sendeleistung von weniger als 100 Milliwatt erp, ausgestrahlt und das Verfahren mit einer Bewegungsermittlungsvorrichtung (2) durchgeführt wird, bei welcher die Sende-/Empfangseinheit (4) als integrierte Schaltung auf einem Halbleiterchip realisiert ist und bei welcher die Auswerteeinheit (20) als integrierte Schaltung auf einem Halbleiterchip realisiert ist, bei welcher die Sende-/Empfangseinheit (4) und die Auswerteeinheit (20) insbesondere gemeinsam auf einem Halbleiterchip realisiert sind.
